# EUROPEAN PATENT SPECIFICATION

(11) **EP 0 351 754 B1**
(45) Date of publication and mention of the grant of the patent: **02.10.1996**
(21) Application number: 89113072.6
(22) Date of filing: 17.07.1989
(51) Int. Cl.: H04N 1/40, H04N 1/407, H04N 1/23

(54) **Apparatus and method for printing halftone images by thermal transfer**
Vorrichtung und Verfahren zum Druck von Halbtonbildern mittels Thermo-Transfer
Appareil et méthode pour l'impression d'images en demi-teinte par transfert thermique

(30) Priority: 18.07.1988 JP 177176/88; 18.07.1988 JP 177177/88; 18.07.1988 JP 177178/88; 18.07.1988 JP 177179/88; 18.07.1988 JP 177180/88; 18.07.1988 JP 177181/88
(43) Date of publication of application: 24.01.1990
(73) Proprietor: CANON KABUSHIKI KAISHA, Ohta-ku Tokyo 146 (JP)
(72) Inventor: Mizoguchi, Yoshiyuki, Kawasaki-shi Kanagawa-ken (JP); Watanabe, Yoshitaka, Kawasaki-shi Kanagawa-ken (JP); Tanno, Koichi, Kawasaki-shi Kanagawa-ken (JP); Ikeda, Keiichi, Yokohama-shi Kanagawa-ken (JP); Ikeda, Ikumasa, Kawasaki-shi Kanagawa-ken (JP); Kawamura, Hideaki, Kawasaki-shi Kanagawa-ken (JP); Takiguchi, Hideo Hiruzu Misato 108, Kawasaki-shi Kanagawa-ken (JP); Kawai, Jun, Setagaya-ku Tokyo (JP); Yamamoto, Mayumi, Chuo-ku Tokyo (JP)
(74) Representative: Tiedtke, Harro, Dipl.-Ing.

(56) References cited:
- EP-A- 0 256 502
- US-A- 4 632 585
- US-A- 4 709 149
- PATENT ABSTRACTS OF JAPAN vol. 12, no. 21 (M-661) 22 January 1988, & JP-A- 62 179975

## Description

### BACKGROUND OF THE INVENTION:

The present invention relates to a recording apparatus and a method for driving the same for performing recording on a recording medium.

The recording apparatuses to which the present invention is applied include, a printer, a copying machine, an electronic typewriter, a facsimile apparatus, and the like.

### Related Background Art

A color printer will be described below as an example of the recording apparatus.

In recent years, color printers for printing out displayed color images such as color computer graphic or color video images have been increasingly developed. An available example of a color printer based on a thermal transfer method using a thermal head is a printer in which a thermal head transfers an image on recording paper by using an ink sheet on which color materials of yellow (Y), magenta (M), cyan (C), and black (Bk) are coated, thereby obtaining a multi-color, multi-gradation or halftone color image.

Typical examples of the ink sheet for use in color recording are a sublimable ink sheet on which a sublimable ink is coated, and a fusible ink sheet on which a fusible ink is coated. In general, the sublimable ink sheet is suited to halftone recording but requires expensive special recording paper having an ink receiving layer. The fusible ink sheet enables recording on inexpensive plain paper but is not suited to halftone recording.

Conventionally, thermal transfer recording using the sublimable ink sheet or fusible ink sheet is realized by an exclusive thermal transfer printer. For this reason, in order to change an ink sheet to be used in accordance with the kind of data to be printed or printing cost, at least two printers must be prepared. This is an economical burden on a user. Therefore, a demand has arisen for a thermal transfer printer capable of selectively mounting the two kinds of ink sheets to perform recording.

Document US-4 709 149 discloses a recording apparatus and a driving method therefore wherein sublimable or fusible ink is transferred to a recording medium. In order to provide halftone levels this recording apparatus uses a dithering method wherein each picture element is recorded with a plurality of dots constituting an n x n dot matrix.

Furthermore, document JP-A-62 179 975 discloses a single recording apparatus and a driving method therefore wherein both sublimable and fusible ink are used for recording.

However, due to the different properties of the sublimable and fusible ink, recording is performed by different gradation levels causing a low image quality.

It is, therefore, an object of the present invention to provide a recording apparatus and a method for driving the same which is capable of using both sublimable and fusible ink sheets while performing high image quality recording.

According to the present invention this object is achieved by the measures as indicated in the independent claims 1 and 5.

### BRIEF DESCRIPTION OF THE DRAWINGS:

The advantages of the invention will become apparent and obvious to those skilled in the pertinent art upon referring to the following description provided in connection with the accompanying drawings, of which:
Figs. 1A and 1B are block diagrams showing arrangements of an image processing unit and a printer unit of a color printer according to an embodiment of the present invention, respectively;
Fig. 1C is a side sectional view showing a mechanical portion of the printer unit of the color printer;
Fig. 2A is a block diagram showing a schematic arrangement of a head driving pulse control circuit;
Fig. 2B is a view showing an arrangement of a picture element data conversion table;
Fig. 2C is a graph showing recording density curves of fusible and sublimable ink sheets as a function of applying energy;
Fig. 2D is a view showing a picture element conversion matrix;
Fig. 2E is a flow chart for explaining a conversion data formation process of a conversion memory;
Fig. 2F is a view showing conversion matrixes;
Fig. 2G is a view showing input picture elements and recorded states obtained when the respective sheets are used;
Fig. 3 is a perspective view showing an urging mechanism of a thermal head shown in Fig. 1C;
Figs. 4A and 4B are plan-views for explaining marking of recording paper in the embodiment;
Fig. 5 is a plan view for explaining an ink sheet in the embodiment;
Fig. 6 is a plan view showing an arrangement of a paper guide lever, a platen, and recording paper shown in Fig. 1C;
Fig. 7 is a view showing the contents in a buffer memory shown in Fig. lB;
Fig. 8 is a block diagram showing in detail the thermal head of the embodiment;
Fig. 9 is a graph showing a relationship between a head energizing time and an image density in the embodiment;
Fig. 10 is a timing chart showing waveforms of signal pulses for driving the thermal head in the printer unit of the embodiment;
Figs. 11A to 11C are flow charts for explaining recording process procedures in the color printer of the embodiment;
Fig. 12 is a block diagram showing an arrangement according to another embodiment of the printer unit of the color printer shown in Fig. 1C;
Fig. 13 is a block diagram showing in detail a head driving pulse control circuit shown in Fig. 12;
Fig. 14 is a block diagram showing an arrangement according to still another embodiment of the printer unit of the color printer shown in Fig. lC;
Figs. 15A and 15B are flow charts for explaining color recording of the embodiment shown in Fig. 12; and
Fig. 16 is a flow chart for explaining color recording of the embodiment shown in Fig. 12.

### DETAILED DESCRIPTION OF THE PREFERRED EMBODIMENTS:

In an embodiment to be described below, if it is discriminated that a fusible ink sheet is mounted, input data of one picture element is divided into a plurality of dots, and a gradation level of each dot is determined in accordance with a gradation level of the input picture element. A thermal head is heated such that each recording element of the thermal head is heated in accordance with a determined gradation level of a corresponding dot. If it is discriminated that a sublimable ink sheet is mounted, a plurality of dots are assigned to input one-picture-element data. Gradation levels of a plurality of dots are determined in accordance with a gradation level of the picture element data, and recording is performed such that the picture element data corresponds to a plurality of dots.

Upon recording on a fusible ink sheet, each dot of a dot matrix has a number of gradation levels of 1/n² with respect to that of a sublimable ink sheet.

A preferred embodiment of the present invention will be described below with reference to the accompanying drawings.

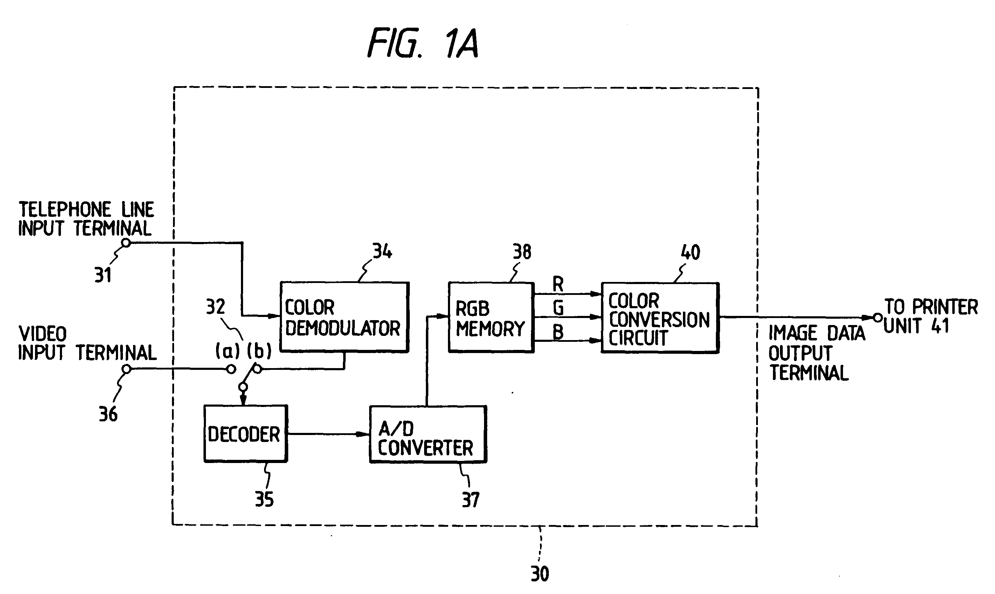

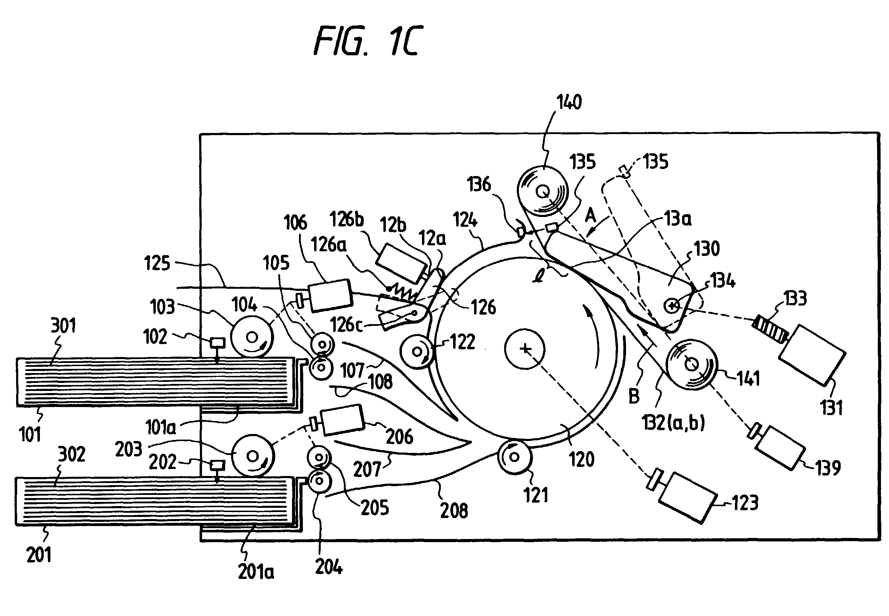

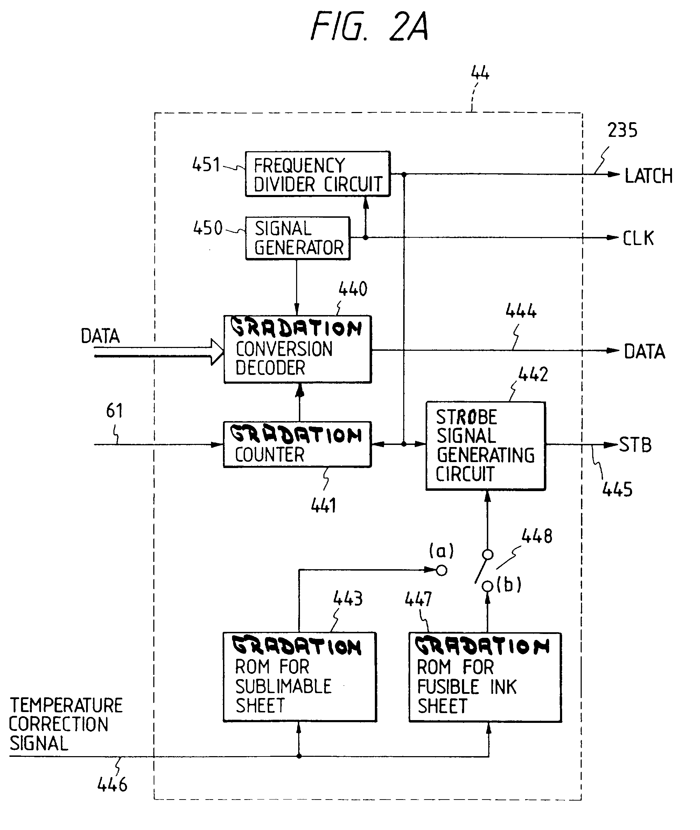

### [Explanation of Color Printer (Figs. 1A to 1C & Figs. 2A to 2G]

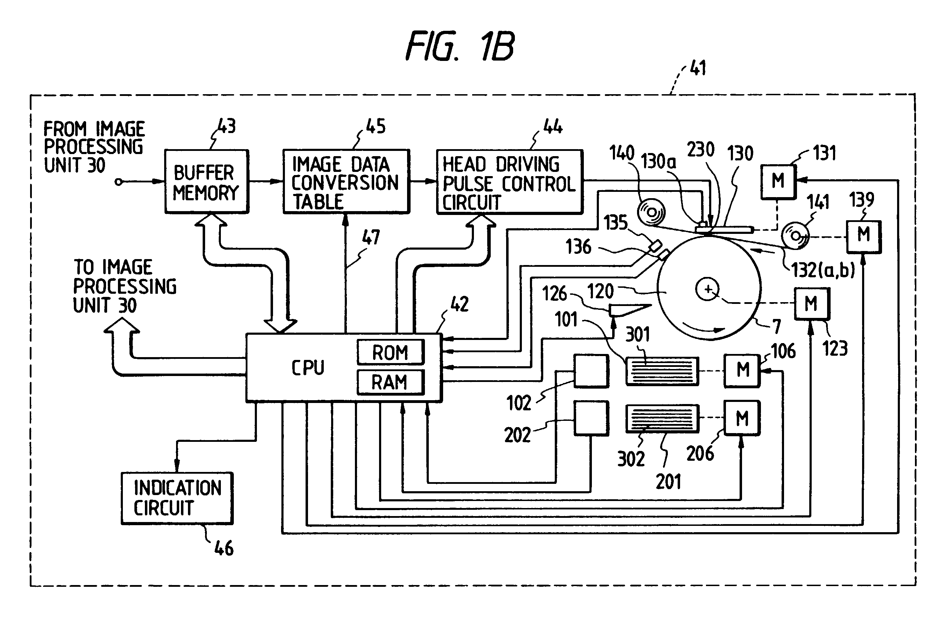

Figs. 1A and 1B are block diagrams showing circuit arrangements of a thermal transfer color printer according to an embodiment of the present invention, in which Fig. 1A shows an input image processing unit and Fig. 1B shows a printer unit including a mechanism shown in Fig. 1C.

In an image processing unit 30, a color image input from, e.g., a telephone line input terminal 31 is supplied to a color demodulator 34. The input color image is demodulated into an NTSC signal or color-difference signals by the demodulator 34 and separated into R, G, and B signals if a switch 32 is connected to a (b) side. The image processing unit 30 has a video input terminal 36 in addition to the telephone line input terminal 31. Therefore, a video signal input to the video input terminal 36 is supplied to the decoder 35 by switching the switch 32 to an (a) side. Each of the RGB signals obtained by separating the color image signal by the decoder 35 is converted into multivalue data of six bits (64 gradation levels) per picture element and stored in an RGB memory 38.

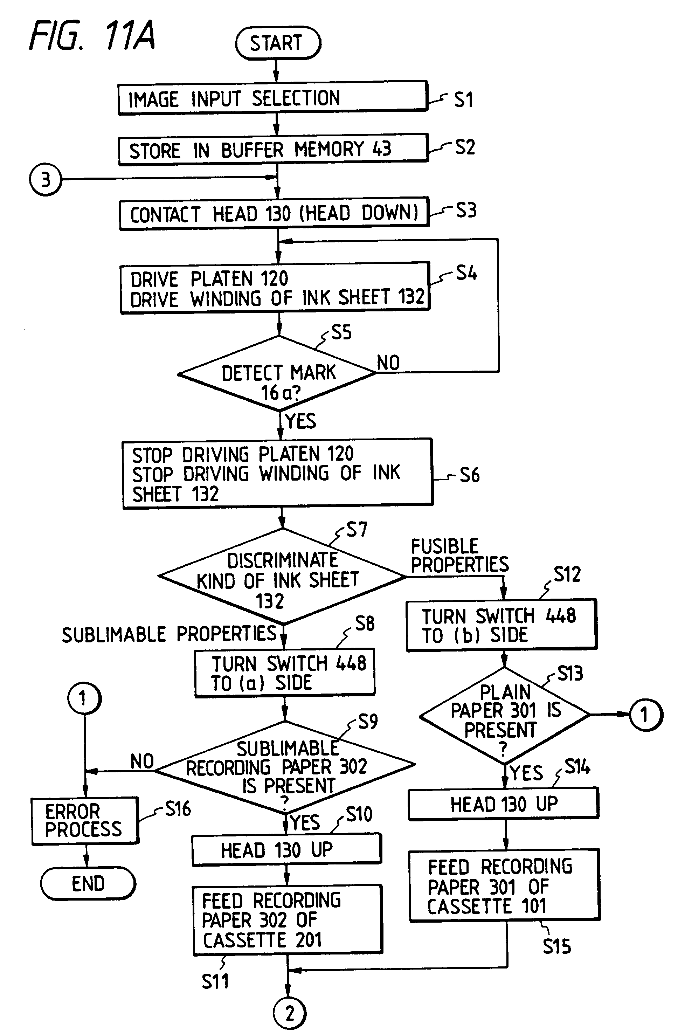

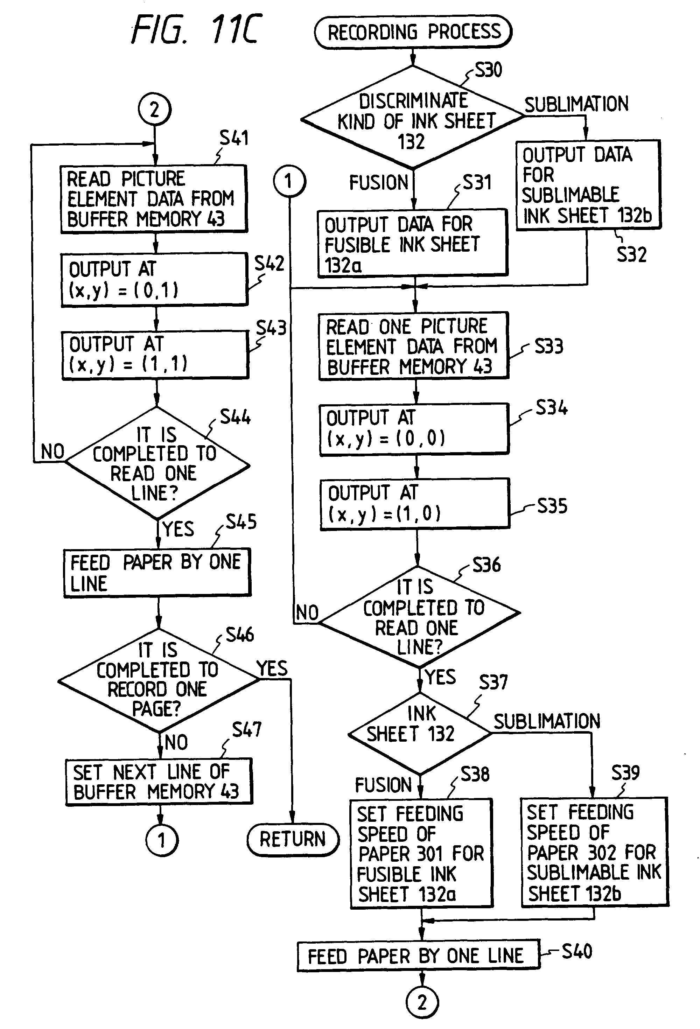

A color conversion circuit 40 receives and converts the R, G, and B signal data into C (cyan), M (magenta), and Y (yellow) signals, respectively. The color image data signal converted into the YMC signal data by the color conversion circuit 40 is supplied to a printer unit 41 shown in Fig. 1B. Note that the above circuit blocks and the switch 32 are controlled by a CPU 42 shown in Fig. 1B. The CPU 42 comprises a ROM for storing process procedures to be described later with reference to flow charts shown in Figs. 11A to 11C and a RAM to be used as a work area in control operations.

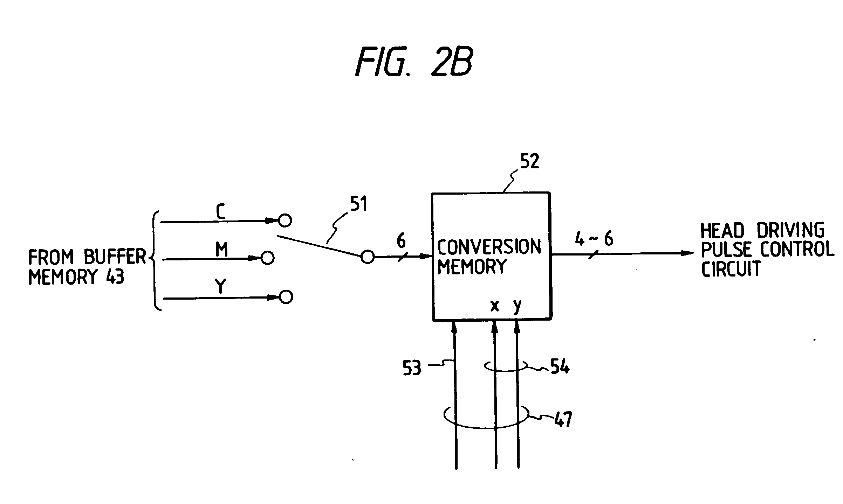

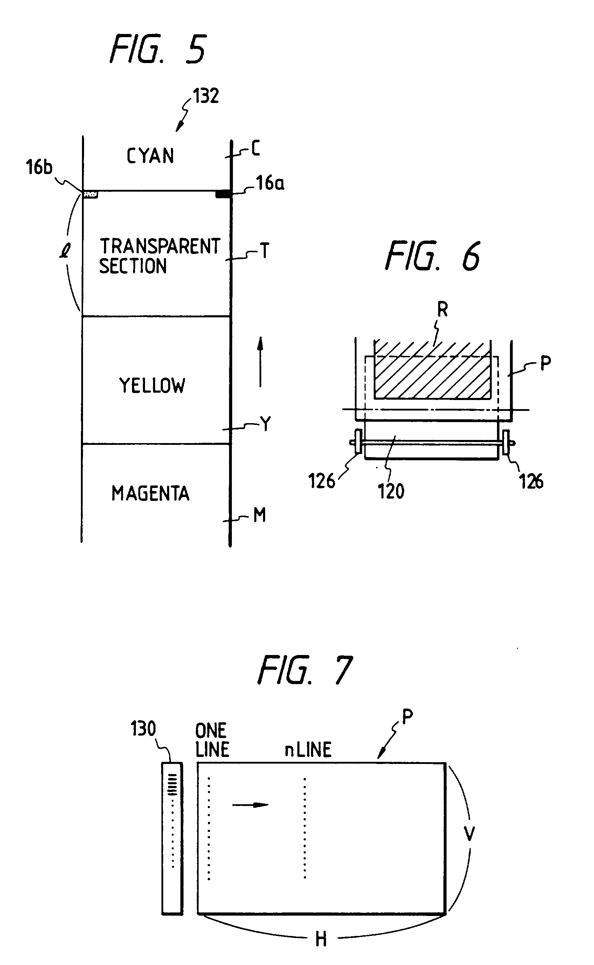

In the printer unit 41, the image data output from the image processing unit 30 is sequentially stored in a buffer memory 43 in units of lines of an image to be recorded as shown in Fig. 7, temporarily held in the buffer memory 43, and then output to a picture element data conversion table 45 shown in detail in Fig. 2B (to be described later) in synchronism with a recording speed under the control of the CPU 42. Picture element data conversion corresponding to the kind of mounted ink sheet is executed, and the converted image data is output to a head driving pulse control circuit 44. Note that an arrangement of the head driving pulse control circuit 44 is shown in detail in Fig. 2A and will be described in detail later. The CPU 42 discriminates the kind of ink sheet 132 (a·b) and indicates the discrimination result, the presence/absence of recording paper P, various error information, and the like on an indication unit 46.

An arrangement of the printer 41 will be described below.

Since a mechanical portion of the printer unit 41 shown in Fig. 1B is shown in detail in a side view of Fig. 1C, a description will be made with reference to Fig. 1C. Note that the same reference numerals as in Fig. 1B denote the same parts in Fig. 1C.

Referring to Fig. 1C, a plain paper cassette 101 stores plain paper, while a sublimable ink recording paper cassette 201 stores sublimable ink recording paper. As shown in Fig. 1C, the printer can simultaneously detachably mount the two cassettes 101 and 201 in mounting portions 101a and 201a, respectively. The cassette 101 stores plain paper 301 for use in thermal transfer using a fusible ink sheet 132a, and the cassette 201 stores sublimable thermal transfer recording paper 302 having an ink receiving layer for ink from a sublimable ink sheet 132b on which a sublimable ink is coated.

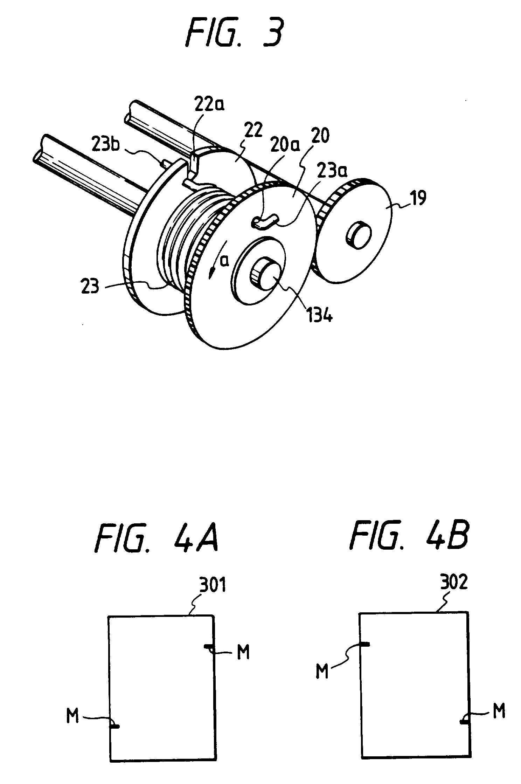

If sheets of two kinds of recording paper have the same size, a sheet of one kind of recording paper may be erroneously stored in a cassette for a sheet of the other kind of recording paper. Therefore, in the printer of this embodiment, the plain paper 301 and the sublimable thermal transfer recording paper 302 have marks M as shown in Figs. 4A and 4B on their lower surfaces, respectively. When a cassette is mounted, a reflecting photosensor 102 or 202 located to oppose the marks detects the plain paper 301 or the sublimable thermal transfer recording paper 302. Therefore, even if the sublimable thermal transfer recording paper 302 is erroneously stored in the cassette 101; the plain paper 301 is erroneously stored in the cassette 201; a sheet of paper is stored to face downward in a cassette; or plain paper without marking is stored, the photosensor 102 or 202 does not detect the recording paper and causes the indication unit 46 (Fig. 1B) to indicate a suitable error message assuming that no paper is present.

Sheets of recording paper stored in the cassette 101 or 201 are fed to the printer main body one after another by a pickup roller 103 or 203 and separating rollers 104 and 105 or 204 and 205, respectively. Driving sources of these rollers are motors 106 and 206. By selectively driving these motors, the plain paper 301 or the sublimable thermal transfer recording paper 302 is fed in the printer main body.

The plain paper 301 or the sublimable thermal transfer recording paper 302 fed by the above paper feeding mechanism is guided by paper guides 107 and 108 or 207 and 208, respectively, to a platen roller 120. Pinch rollers 121 and 122 are biased toward the platen roller 120 by springs (not shown) and convey the recording paper such that the recording paper is sandwiched between the platen roller 120 and the pinch rollers 121 and 122. A motor 123 is a stepping motor and drives the platen roller 120 via reduction gears (not shown). A paper guide 124 guides the paper toward an exhaust tray for receiving exhausted recorded paper.

A paper guide lever 126 is biased by a spring 126a and a plunger 126b. Upon ON of the plunger 126b, the lever 126 is pivoted about a shaft 126c by an attracting force of the plunger 126b to a position (separated from the platen roller 120) indicated by a solid line in Fig. 1C. Upon OFF of the plunger 126b, the level 126 is pivoted by a biasing force of the spring 126a to a position (in contact with the platen roller 120) indicated by a broken line in Fig. 1C.

Fig. 6 shows a positional relationship between the platen roller 120, the paper guide lever 126, and the recording paper P, i.e., 301 or 302. As shown in Fig. 6, the length of the platen roller 120 in the longitudinal direction is set slightly smaller than the width of the recording paper 301 or 302 and sufficiently brings the platen roller 120 into contact with a head 130 throughout the entire area of a recording range R indicated as a hatched portion. The paper guide levers 126 are located at the both sides of the platen roller 120 and within the width of the recording paper 301 or 302 and guide conveyance of the recording paper 301 or 302.

Therefore, when the paper guide lever 126 is in the position indicated by the solid line in Fig. 1C, the recording paper P is guided by the side surface of the lower surface 12a of the paper guide lever 126 and conveyed again to the recording position corresponding to the head 130 via the pinch rollers 121 and 122. When the paper guide lever 126 is in the position indicated by the broken line in Fig. 1C, the recording paper 301 or 302 is guided by the side surface of the upper surface 12b of the paper guide lever 126, separated from the platen roller 120, and then exhausted to the exhaust tray 125.

A contact/separation mechanism of the head 130 with respect to the platen roller 120 will be described below. A head up/down motor 131 drives the head 130 such that the head 130 is urged against (down) via the ink sheet 132 and the recording paper P or separated from (up) the platen roller 120. That is, rotation of a worm gear 133 mounted on the shaft of the motor 131 is transmitted to gears 19 and 20 shown in Fig. 3 via reduction gears (not shown). The head 130 and a rotary plate 22 are integrally mounted on a head driving shaft 134 of the gear 20. Both ends of a torsion coil spring 23 are fixed to the rotary plate 22 and the gear 20.

Therefore, when the motor 131 is driven to rotate the gear 20 counterclockwise as indicated by an arrow a in Fig. 3, a force in the same direction acts on the rotary plate 22 via the spring 23 to drive the head driving shaft 134 and the head 130 in a direction indicated by an arrow A in Fig. 1C, thereby bringing the head 130 into contact with the platen roller 120. When the motor 131 is driven to further rotate the gear 20 counterclockwise, the spring 23 is charged, and the head 130 is urged against the platen roller 120 by the charging force. At this time, a rotational phase of the gear 20 is detected by a detection mechanism (not shown) to detect a charging amount of the spring 23, thereby controlling the urging force acting on the head 130 against the platen roller 120 by at least two steps. Note that the urging force on the head 130 against the platen roller 120 is controlled by pulse count control performed by the CPU when the motor 131 is a pulse motor and is controlled by a detection mechanism such as a switch when the motor 131 is a DC motor. In this case, the two-step urging force includes an urging force (e.g., about 4 kg to 6 kg, and preferably, about 5 kg) when plain paper is used and an optimal urging force (e.g., about 2 kg to 4 kg, and preferably, about 3 kg) when sublimable thermal transfer recording paper is used. When the motor 131 is driven in an opposite direction (clockwise), the gear 20 is driven in a direction opposite to the arrow shown in Fig. 3. Therefore, the head 130 is pivoted about the shaft 134 in a direction opposite to the direction of arrow A in Fig. 1C to the position indicated by the broken line and removed from the platen roller 120.

In order to uniformly distribute the urging force acting on the head 130 against the platen roller 120 along the longitudinal direction of the platen roller 120, the head urging mechanism comprising the gears 19 and 20, the rotary plate 22, and the torsion coil spring 23 shown in Fig. 3 is mounted on each of two base plates (not shown) for supporting both the side portions of the platen roller 120. (Note that an end portion 23a of the torsion coil spring 23 is locked by an opening 20a formed in the gear 20 and its other end 23b is locked by a notch 22a formed in the rotary plate 22). In addition, the worm gear 133 is mounted on the shaft of the motor 131. Therefore, even when energization of the motor 131 is interrupted after the spring 23 is charged to urge the head 130 against the platen roller 120, the shaft of the motor 131 is reversely rotated by the charging force of the spring 23 to keep urging the head 130 against the platen roller 120.

### [Explanation of Ink Sheet and Driving System thereof (Fig. 5)]

An arrangement of the ink sheet 132 and its driving system will be described below. As shown in Fig. 5, on the ink sheet 132, a transparent portion T having a mark 16a for detecting a sheet position and portions on which dyes of yellow Y, magenta M, and cyan C for performing color recording are coated are successively formed in the order named. The transparent portion T is a portion for synchronizing the colors to be printed. When the portion T is detected, it is detected that the yellow Y portion comes next.

On the sublimable ink sheet 132b, sublimable dyes are coated on Y, M, and C portions. When the sublimable ink sheet 132b is to be used, color recording is performed by using sublimable thermal transfer paper in the cassette 201. On the fusible ink sheet 132a, a fusible ink is coated on Y, M, and C portions. When the fusible ink sheet 132a is to be used, color recording is performed by using the plain paper 301 stored in the cassette 101. A mark 16b is not added to the fusible ink sheet 132a but only to the sublimable ink sheet 132b. Therefore, the sublimable ink sheet 132b has both the positioning mark 16a and the identification mark 16b, while the fusible ink sheet 132a has only the positioning mark 16a.

The fusible ink sheet is obtained by coating a solid ink fusible with heat on a base consisting of, e.g., polyester, polyimide, nylon, or cellophane and having high heat-resistance and thermal conductivity. The solid ink is formed of a binder, a colorant, and a sofetener. Examples of the binder, the colorant, and the sofetener are: carnauba wax and ester wax; a dye and a pigment; and a lubricant, respectively. A melting point of the fusible ink sheet is e.g., about 60°C to 80°C.

The sublimable ink sheet is obtained by forming a dye-containing layer consisting of a heat sublimable dye sublimable with heat and a dispersant or binding agent such as methylcellulose, if necessary, on the base described above. Examples of the heat sublimable dye are a disperse monoazo type dye and a disperse anthraquinone type dye.

The mark representing the kind of ink sheet may be printed in black color or made by adhering a silver-color piece. In addition, the position of the mark is not limited. For example, in the case of a monocolor ink sheet, a line representing the kind of ink sheet may be formed on the end portion not used upon recording along the longitudinal direction of the ink sheet such that it is formed at the right side of Fig. 5 for the sublimable ink sheet 132b and at the left side thereof for the fusible ink sheet 132a. By reading a position of the line by a photosensor, the printer may discriminate the kind of ink sheet.

Referring to Fig. 1C, a stepping motor 139 is a driving source of the feeding mechanism for the ink sheet 132a or 132b. That is, rotation of the motor 139 is transmitted to a drive shaft 140 to wind the ink sheet 132 in a direction indicated by an arrow B. In this case, suitable friction is applied to a rotating shaft 141 of the roll ink sheet 132. Therefore, when the ink sheet 132 is to be wound by the winding shaft 140, since the shaft serves as a load on the winding shaft 140, the ink sheet 132 is not loosened. In addition, even when the platen roller 120 is rotated with the head 130 urged against the platen roller 120, an urging force acting on the head 130 against the platen roller 120 can be adjusted so that the ink sheet 132 is not loosened by a frictional force or static electricity between the recording paper 301 or 302 and the ink sheet 132a or 132b.

### [Mark Detection of Ink Sheet (Fig. 1C & Fig. 5)]

Referring to Fig. 1C, photodiodes 135 and phototransistors 136 constitute two photosensors (135-1 and 136-1, and 135-2 and 136-2). Each photodiode 135 is mounted on the upper portion of the thermal head 130 and paired with the corresponding phototransistor 136 to constitute one photosensor. These photosensors are for detecting the marks 16a and 16b formed on the ink sheet 132, respectively. That is, the photosensor (135-1 and 136-1) for detecting the mark 16a and the photosensor (135-2 and 136-2) for detecting the mark 16b are arranged in the widthwise direction of the recording paper.

When the thermal head 130 is down and one photosensor detects the mark 16a, the ink sheet 132 is set at a recording start initial position. At this time, if the other photosensor detects the mark 16b, the mounted ink sheet 132 is discriminated to be the sublimable ink sheet 132b. If the mark 16b is not detected, the fusible ink sheet 132a is discriminated.

As shown in Fig. 5, a transparent portion having a length "ℓ" from the position of the photosensor 135·136 to the recording position 13a (Fig. 1C) of the head 130 is formed on the downstream side of the mark 16b of the ink sheet 132. Therefore, when the mark 16a is detected by the photosensor (135·136), the leading edge of the ink sheet Y opposes the head 130. In this manner, the initial position of the ink sheet for starting recording is set.

A reduction ratio of the reduction system comprising the stepping motors 123 and 139 is set such that the ink sheet 132 is fed faster than the recording paper P at the recording position 13a of the head 130 when the motors 123 and 139 are similarly driven. However, since a slip mechanism (not shown) is provided to the winding shaft 140, the ink sheet is wound in the same amount as a feed amount of the recording paper at the head and the platen roller while a difference between the feed amounts is absorbed by the slip mechanism.

### [Explanation of Head Driving Pulse Control Circuit (Figs. 2A to 2G & Figs. 8 to 10)]

The head driving pulse control circuit 44 has an arrangement as shown in Fig. 2A.

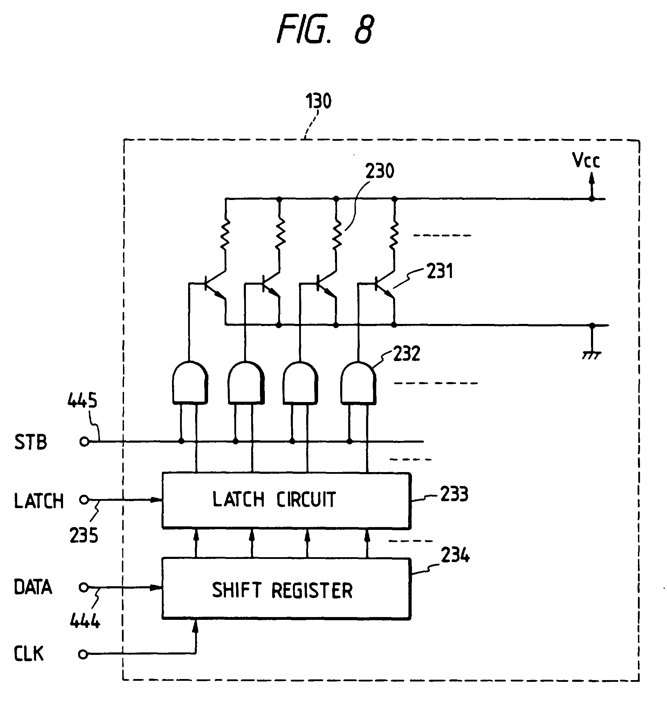

Fig. 8 shows an arrangement of the thermal head 130.

Referring to Fig. 8, heating resistive elements 230 are arranged in a line in the widthwise direction of the recording paper with element intervals of 12 picture elements (12 heating elements/mm) therebetween. A latch circuit 233 latches one-line data to be recorded. Serial data 444 supplied to a shift register 234 is sequentially shifted in by a clock pulse CLK, latched by the latch circuit 233 in accordance with a latch signal 235, and converted into parallel data. In this manner, data to be recorded corresponding to the heating resistive elements 230 is held in the latch circuit 233. A timing and a time period for applying a voltage are determined by a strobe signal STB445, and an output transistor 231 corresponding to an element having data is turned on. In this manner, the corresponding heating resistive element 230 is energized and heated.

Referring to Fig. 2A, a signal generator 450 outputs a clock CLK of a predetermined frequency, and frequency divider circuit 451 outputs a latch signal 235 each time it has counted a number of pulses of the clock signal CLK corresponding to the number of heating elements of one line. In accordance with each picture element of input picture element data, a gradation conversion decoder 440 transfers gradation data 444 to each register stage of the shift register 234 in synchronism with the signal CLK. In order to process a color image, the gradation conversion decoder 440 performs gradation conversion for each of colors Y, M, and C.

A gradation counter 441 counts up each time the latch signal 235 is supplied. On the basis of a command signal 61 from the CPU 42, the gradation counter 441 performs counting of mod 64 (six bits) for the sublimable ink sheet 132b and counting of mod 16 (four bits) for the fusible ink sheet 132a. The gradation conversion decoder 440 compares the count of the gradation counter 441 with the input picture element data. The gradation conversion decoder 440 outputs, as the gradation data 444, "1" when the picture element data is larger than or equal to the count and "0" when the picture element data is smaller than the count.

A strobe signal generating circuit 442 outputs a strobe signal STB445 slightly delayed from the latch signal, thereby driving the heating elements 230 to perform driving. A gradation ROM table 443 stores data for adjusting the pulse width of the STB signal for a sublimable ink sheet, and a gradation ROM 447 for a fusible ink sheet stores data for adjusting the pulse width of the STB signal for a fusible ink sheet. Each ROM receives a temperature correction signal 446 from a heat temperature detector 130a and stores correction data for obtaining optimal gradation characteristics for each color on the basis of the temperature correction signal 446. A switch 448 is changed over by the CPU 42 in accordance with the kind of mounted ink sheet 132 and outputs gradation correction data corresponding to the kind of ink sheet 132 to the strobe signal generating circuit 442.

### [Explanation of Picture Element Data Conversion (Figs. 2B to 2F)]

Fig. 2B is a block diagram showing an arrangement of the picture element data conversion table for converting, in accordance with the kind of mounted ink sheet, each picture element of image data read out from the buffer memory 43.

Referring to Fig. 2B, a switch 51 is changed over in accordance with a color (YMC) of the readout image data, and a conversion memory 52 stores conversion data to be described later. The conversion memory 52 receives the image data from the buffer memory 43 as an address and outputs, in accordance with a control signal 47 from the CPU 42, 4-bit data when the fusible ink sheet 132a is mounted and 6-bit data when the sublimable ink sheet 132b is mounted. The control signal 47 includes a designation signal 53 for designating the kind of ink sheet 132 and an x-y address signal 54 of a 2 x 2 matrix output when the mounted ink sheet is a fusible ink sheet.

A data format of the conversion memory 52 will be described below.

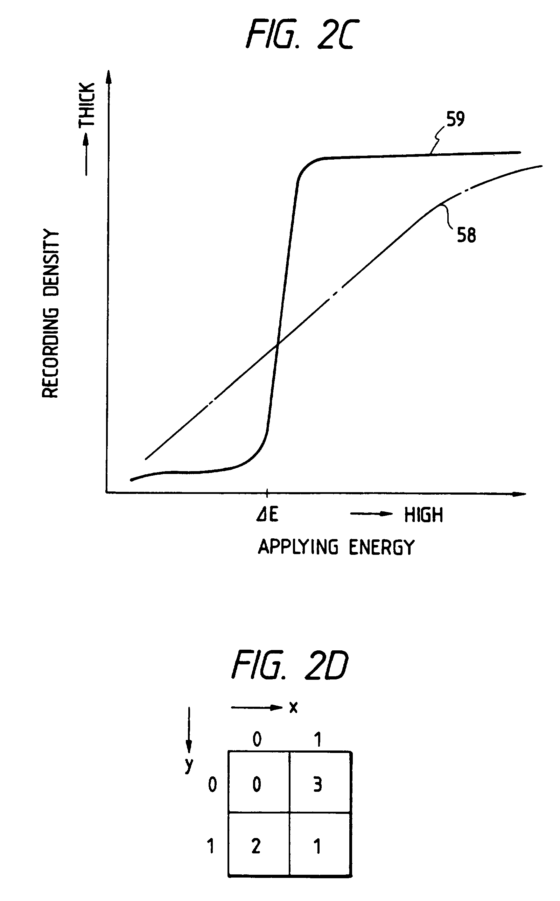

Fig. 2C is a graph showing a relationship between an applying energy to the thermal head 130 and recording density in accordance with the kind of ink sheet. Referring to Fig. 2C, a curve 58 indicates a relationship between the applying energy and the recording density obtained when the sublimable ink sheet 132b is used, and a curve 59 indicates a relationship between the applying energy and the recording density obtained when the fusible ink sheet 132a is used. As shown in Fig. 2C, in the case of the sublimable ink sheet 132b, the recording density substantially in proportional to the applied energy is obtained. However, in the case of the fusible ink sheet 132a, since the density value is rapidly increased near ΔE, it is difficult to perform multi-gradation level recording which can be performed by the sublimable ink sheet 132b.

Assuming that currently input image data has 64 gradation levels (six bits), the data with 64 gradation levels (six bits) is directly output for the sublimable ink sheet 132b. In the case of the fusible ink sheet 132a, however, the input one-picture-element data is divided into 2 x = 4 dots, and each dot is expressed by 16 gradation levels to obtain 64 (= 4 x 16) gradation levels. As a result, the number of gradation levels is not apparently lowered even for the fusible ink sheet 132a. When the fusible ink sheet 132a is used, each input picture element is recorded by four dots. Therefore, in order to equalize the sizes of the recorded image data, the input picture element data is expressed by 2 x 2 = 4 dots for the sublimable ink sheet 132b. Note that the gradation level of each dot to be recorded is equal to that of the input picture element data.

Fig. 2D shows a picture element conversion matrix used in this embodiment. X and y axes are determined as shown in Fig. 2D to set addresses.

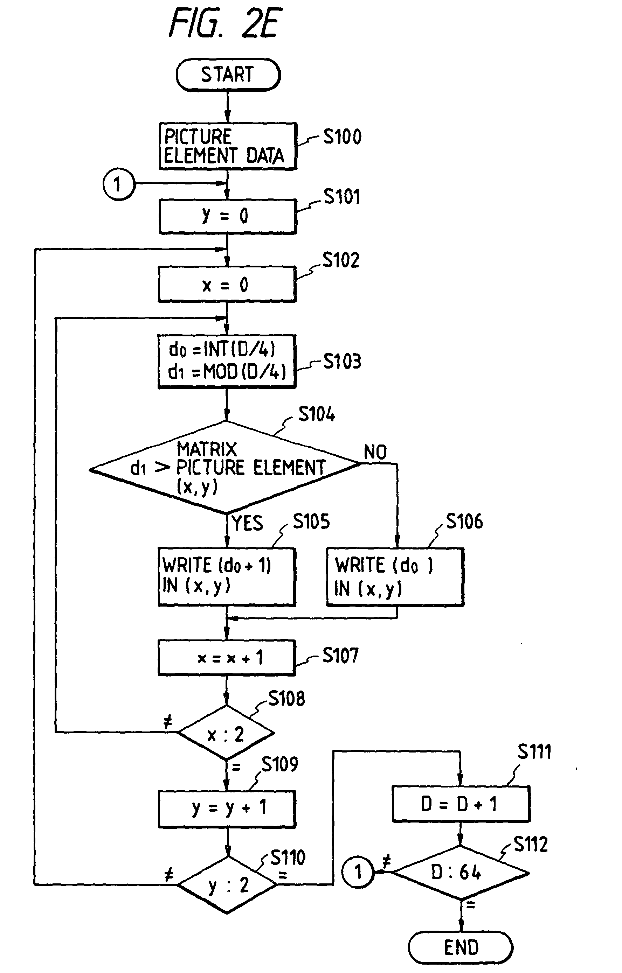

Fig. 2E is a flow chart for explaining a process for forming fusible ink sheet table data of the conversion memory 52. This data formation process is shown for explaining the data format of the conversion memory 52 and therefore need not be executed by the color printer of this embodiment. That is, data having such characteristics need only be stored in the memory 52. Note that since the same data as the address (image data) of conversion data for a sublimable ink sheet is stored at each address, data read out from the buffer memory 43 is directly output to the head driving pulse control circuit 44.

Referring to Fig. 2E, picture element data D is set to be "0" in step S100, and y = 0 and x = 0 are set in steps S101 and S102, respectively. In step S103, d₀ is set as an integer part of (D/4) and d₁ is set as a remainder of (D/4). In step S104, a picture element designated by (x,y) of the matrix shown in Fig. 2D is compared with the value of d₁. If D₁ is larger than the picture element, the flow advances to step S105, and (d₀ + 1) is written in the picture element portion. If d₁ is not larger than the picture element, d₀ is written in the picture element portion. In this manner, data is written in a position corresponding to (0,0) of the matrix and then written in the respective picture element positions in an order of (1,0), (0,1), and (1,1). After data of four picture elements are written, the flow advances to step S111, and the picture element data D is incremented by one. The above process is repeatedly executed until the picture element data D exceeds the maximum number of gradation levels (64).

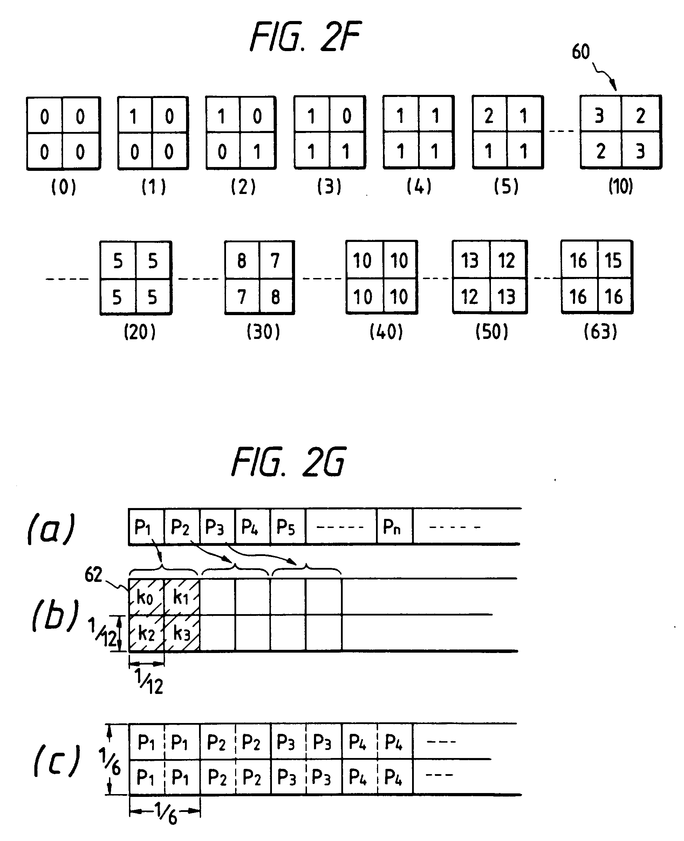

Fig. 2F shows conversion data formed on the basis of the matrix shown in Fig. 2D in accordance with the harmonization level of the input picture element data. Referring to Fig. 2F, the gradation level of an input picture element is written in parentheses below each matrix. Therefore, when the gradation level of an input picture element is "10", data is converted into data represented by reference numeral 60 and output with four bits for each dot. Similar to the case of the sublimable ink sheet, the gradation level of each dot is recorded under the control of the head driving pulse control circuit 44.

Fig. 2G shows a relationship between the input picture element data (P1 to Pn), a recording density obtained when the fusible ink sheet is used, and that obtained when the sublimable ink sheet is used.

Referring to Fig. 2G, (a) represents an input picture element data row in which P1 to Pn correspond to the respective picture elements. (b) represents dot data obtained by converting and recording input picture element data for the fusible ink sheet. That is, the picture element P1 is converted and recorded in a hatched portion 62. Dots k₀ to k₃ represent dot data obtained by converting the picture element P1 and correspond to the matrix shown in Fig. 2F. Each dot corresponds to each heating element 230 of the thermal head 130 of 12 picture elements. (c) represents a printing dot row for the sublimable ink sheet, in which one input picture element data is recorded to form two rows having two picture elements in the column direction, i.e., recorded by four dots. Therefore, if sizes of input image picture data are the same, a recording size obtained by the fusible ink sheet becomes equal to that obtained by the sublimable ink sheet.

A heating method of the thermal head 130 of this embodiment will be described below.

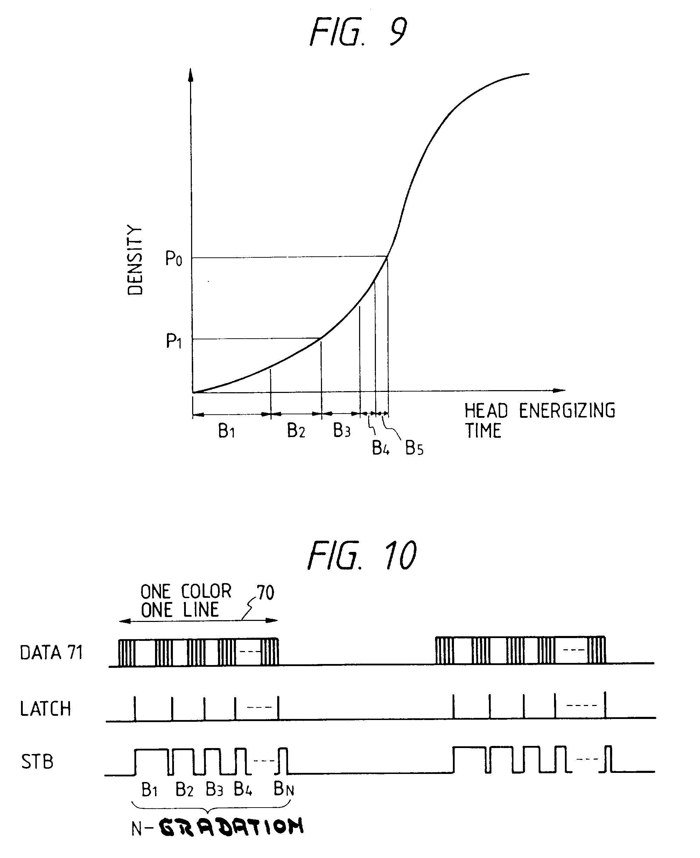

Fig. 9 is a graph showing a relationship between a head energizing time and recording density obtained by the thermal head 130. Referring to Fig. 9, in order to obtain a density at P₀, the heating resistive elements 230 are energized for a time of (B₁ + B₂ + B₃ + B₄ + B₅). As is apparent from Fig. 9, the energizing time of the head 130 is not proportional to its recording density. For example, in order to obtain a recording density at P₁, the head 130 must be energized for an energizing time of about (B₁ + B₂).

Fig. 10 is a timing chart showing head driving and control pulses upon color image recording in the color printer having the energizing time-recording density characteristics as shown in Fig. 9.

In this case, the thermal head 130 is a line head, and reference numeral 70 denotes a data recording timing of one line. Assuming that image data of one picture element supplied to the gradation conversion decoder 440 shown in Fig. 2A is constituted by six bits, 64 kinds of data can be made for each picture element. In this case, therefore, N of N-gradation is "64". Gradation data 444 with respect to the first STB signal of one-line data is transferred to the shift register 234 and latched by the latch circuit 233 in accordance with the latch signal 235. An STB signal B₁ is output and a heating element 230 from which data "1" is output is driven for the pulse width of the signal B₁.

During this driving, when the next data is supplied to the shift register 234 and the STB signal falls, data is latched by the latch circuit 233 in accordance with the latch signal 235. The STB signal is then output for a time interval of B₂. This operation is executed 64 times (i.e., for STB signals B₁ to B₆₄) to perform recording of one line.

That is, the gradation conversion decoder 440 receives image data. When the value of the mth picture element data to be recorded of the image is "20", the gradation conversion decoder 440 outputs data 71, in which each of the first 20 data is "1" and each of last 44 (64 - 20) data is "0", to the mth stage of the shift register 234 corresponding to the position of the picture element data 64 times (in the case of the sublimable ink sheet). It is a matter of course that data is set in another stage of the shift register 234 in accordance with a gradation level of the corresponding picture element and output 16 times in the case of the fusible ink sheet 132a.

At this time, the pulse width of each strobe signal STB is changed in accordance with the number of output times of the STB signal as shown in Fig. 10 due to the reason explained with reference to Fig. 9. The strobe signal generating circuit 442 executes such pulse width adjustment for the STB signal. As described above, the strobe signal generating circuit 442 receives gradation data corresponding to the kind of ink sheet 132 from the ROM table and adjusts the width, period, or the like of the STB signal 445 in accordance with the kind of ink sheet 132.

### [Explanation of Operation of Color Printer (Figs. 11A to 11C)]

A color recording sequence will be described below with reference to flow charts shown in Figs. 11A to 11C. Control programs represented by the flow charts are stored in the ROM of the CPU 24.

In step S1, selection of the image signal input terminals shown in Fig. 1A, i.e., determination of whether image data is to be input from the telephone line input terminal 31 or the video input terminal 36 is automatically or manually performed. In step S2, input color image data is stored in the RGB memory 38. In step S3, the thermal head 130 is brought into contact with the platen roller 120. At this time, by suitably charging the torsion coil spring 23 by the driving motor 131, an optimal urging force for thermal transfer printing is applied to the head 130 against the platen roller 120.

In step S4, driving of the platen roller 120 and winding of the ink sheet 132 are started, and detection of the initial position of the ink sheet 132 shown in Fig. 5 is performed. The phototransistors 136 for detecting signals from the corresponding photodiodes 135 constitute two pairs of photosensors (135-1 and 136-1, and 135-2 and 136-2) for detecting the marks 16a and 16b shown in Fig. 5, respectively. The ink sheet 132 is moved in the arrow direction shown in Fig. 5 until the phototransistor 136-1 outputs a detection signal.

When the mark 16a is detected by the phototransistor 136 in step S5, this means that the thermal head 130 and the ink sheet 132 are set in positions recordable with each other. Therefore, winding of the ink sheet 132 and driving of the platen roller 120 are stopped in step S6, and the mark 16b is detected by the photosensor 136-2 in step S7, thereby discriminating the kind of ink sheet 132. That is, if the mark 16b is detected by the reflecting photosensor (135-2 and 136-2), the flow advances from step S7 to S8 because the ink sheet 132 is the sublimable ink sheet 132b. If the photosensor (135-2 and 136-2) does not detect the mark 16b, the mounted ink sheet is discriminated to be the fusible ink sheet 132a, and the flow advances to step S12. The detected kind of ink sheet is stored in the RAM of the CPU and used in control to be described later.

In step S8, the switch 448 is changed over to the (a) side, and information representing that the mounted ink sheet is the sublimable sheet 132b is indicated on the indication unit 46. In step S9, whether recording paper for the sublimable ink sheet is stored in the cassette 201 is discriminated. If the sublimable ink recording paper 302 is stored in the cassette 201, the flow advances to step S9. The thermal head 130 is moved up and separated from the platen roller. In step S11, the pickup roller 203 or the separating rollers 204 and 205 are driven by the motor 206 to feed the recording paper 302 from the cassette 201 toward the platen roller 120.

If the fusible ink sheet 132a is discriminated, the switch 448 is changed over to the (b) side and information representing that the mounted ink sheet is the fusible ink sheet 132a is indicated on the indication unit 46, in step S12. Instep S13, whether the plain paper 301 is stored in the cassette 101 is checked. If the plain paper 301 is stored, the flow advances to step S14. In step S14, the thermal head 130 is moved up, and the flow advances to step S15. In step S15, the pickup roller 103 and the separating rollers 104 and 105 are driven by the motor 106 to feed the plain paper 301 toward the platen roller 120. If the corresponding recording paper is not present in steps S9 and S13, an error process such as indication of information representing that no paper is present is performed. Note that in order to protect the ink sheet from being conveyed by rotation of the platen roller 120 upon detection of the initial position of the recording paper (steps S17 and S22) performed after the above paper feed operation, the head 130 is slightly separated from the platen roller 120 before paper feeding. Therefore, the ink sheet 132 is not fed together with the recording paper.

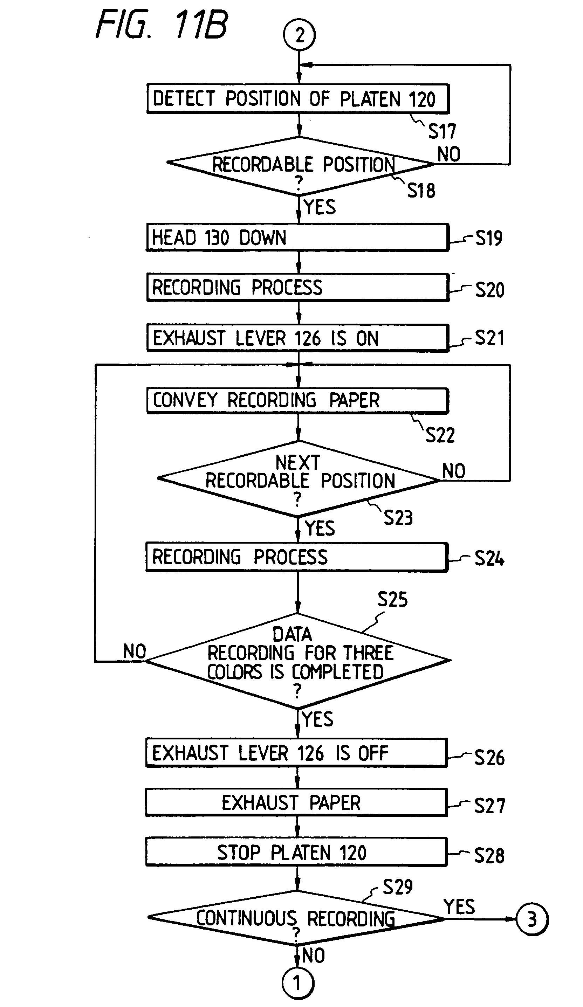

In step S17 (Fig. 11B), a rotational position of the platen roller 120 is detected by a rotational phase angle detector (not shown) of the platen roller 120. If it is determined in step S18 that the recording paper is set in a recordable position, the thermal head 130 is moved down and brought into contact with the platen roller 120. In step S20, a recording process shown in the flow chart of Fig. 11C is performed to record one page of one-color image data (Y data). At this time, as described above, an urging force acting on the head 130 against the platen roller 120 is controlled to be an optimal urging force for each ink sheet determined in accordance with the kind of ink sheet 132. After one page of one-color image data is recorded, the flow advances to step S21, and the paper guide lever 126 is displaced to the position indicated by the solid line in Fig. 1C.

In steps S22 and S23, the recording paper is conveyed again to the recording position by rotation of the platen roller 120. That is, on the basis of the rotation position of the platen roller 120, the platen roller 120 is rotated until the recording paper and the ink sheet 132 are conveyed to the recordable positions. In step S24, color recording of the next color is performed. Upon recording operation performed in steps S20 and S24, the strobe signal generating circuit 442 outputs the STB signal 445 corresponding to the mounted ink sheet 132, as described above. In this recording operation, recording is performed such that the ink sheet 132 is moved at the same moving speed as the recording paper after the recording paper reached the recordable point. If it is determined in step S25 that data recording for three colors Y, M, and C is completed, the flow advances to step S26.

In step S26, the exhaust lever 126 is turned off to be displaced to the position indicated by the dotted line in Fig. 1C. In step S27, the recorded paper is exhausted to the tray 125 by rotation of the platen roller 120. In step S28, rotation of the platen roller 120 is stopped. If it is determined in step S29 that continuous recording is to be performed, the flow returns to step S3, and the above operation is executed.

Fig. 11C shows a flow chart for explaining the recording process of this embodiment shown in steps S20 and S24 of Fig. 11B.

In step S30, the kind of mounted ink sheet is discriminated on the basis of information stored in the RAM of the CPU 42. If the fusible ink sheet 132a is discriminated, a 4-bit count is designated by a designation signal 61, and the fusible ink sheet data is read out from the conversion memory 52 by a designation signal 53, in step S31. If the sublimable ink sheet 132b is discriminated, the flow advances to step S32, and the designation signals 53 and 61 for the sublimable ink sheet are output. One-picture-element data is read out from the buffer memory 43 in step S33, an (x,y) address signal 54 is output at (0,0) in step S34, and the address signal 54 is output at (1,0) in step S35. In step S36, whether it is completed to read one line is checked, and steps S33 to S36 are executed until it is completed to read one line.

When recording of one line is completed, the flow advances to step S37, and the kind of mounted ink sheet is discriminated. In steps S38 and S39, a feeding speed of recording paper corresponding to the kind of ink sheet is set. In step S40, the recording paper is fed by one line at the speed corresponding to the kind of ink sheet. That is, the fusible ink sheet 132a requires only a shorter recording time than that of the sublimable ink sheet 132b, and the number of gradation levels of one dot of the fusible ink sheet is 1/4 that of the sublimable ink sheet. Therefore, since the recording time of the fusible ink sheet 132a can be largely reduced as compared with that of the sublimable ink sheet 132b, the feeding speed of recording paper can be increased for the fusible ink sheet 132a.

In step S41, data of the same line as in step S33 is read out, and in steps S42 to S44, the second row of a dot matrix is recorded. After one line of the picture element data is recorded throughout two rows, the flow advances to step S45, and the recording paper is fed as in step S40. If it is determined in step S46 that it is not completed to record one page of the image data, the next read address of the buffer memory 43 is set in step S47, and the flow returns to step S33. Thereafter, the above process is executed until it is completed to record one page.

As described above, according to the above embodiment, the kind of mounted ink sheet is detected, and recording control corresponding to the sheet can be performed. Therefore, even if the fusible ink sheet is mounted, gradation recording can be effectively performed.

In addition, the above embodiment has an effect of performing image recording of the same size regardless of the kind of ink sheet.

Another embodiment of the present invention will be described below.

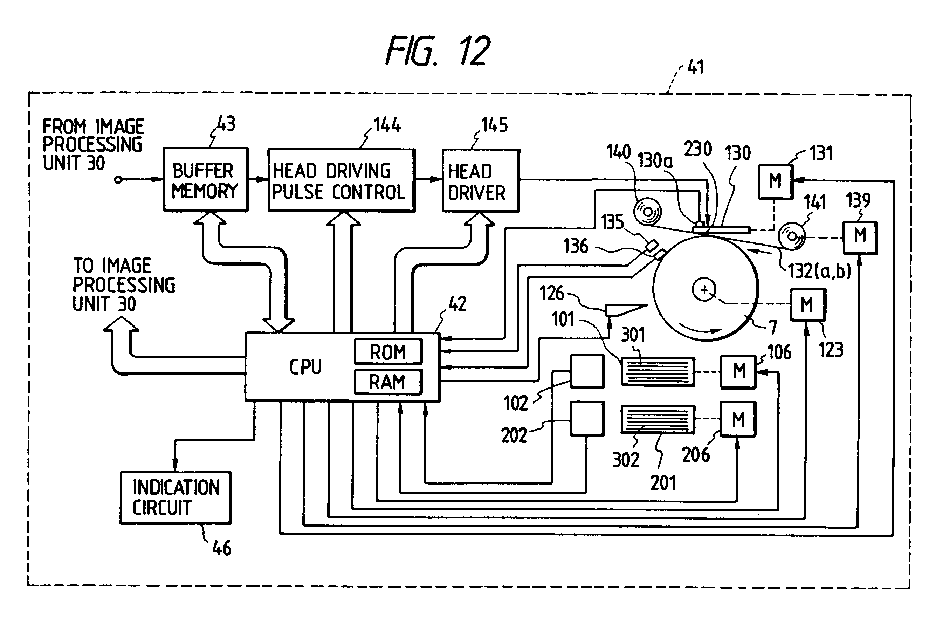

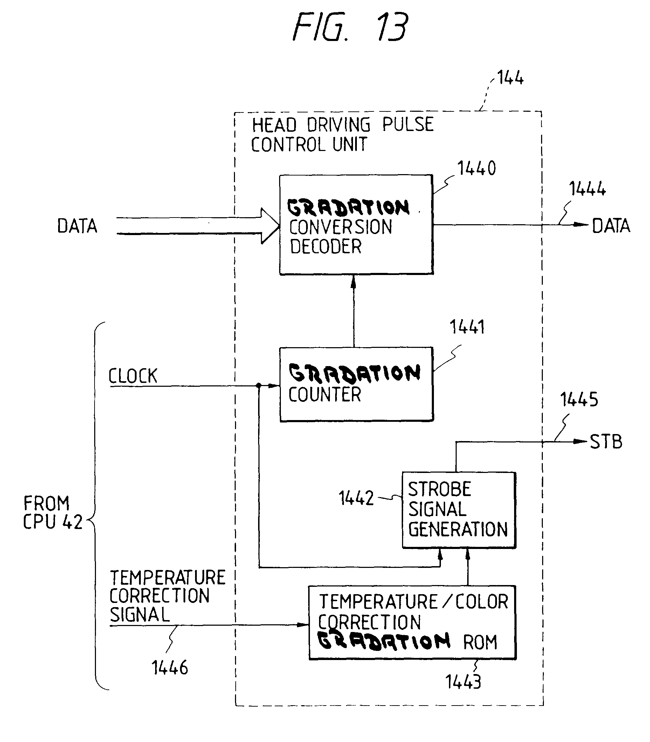

This embodiment can replace the above embodiment in order to discriminate whether an ink sheet mounted in an ink sheet mounting portion is a sublimable ink sheet or fusible ink sheet, and can be suitably used upon replacement. Fig. 12 is a block diagram showing an arrangement of a printer unit of the color printer shown in Fig. 1C, and Fig. 13 is a block diagram shown in detail a head driving pulse control circuit shown in Fig. 12. Note that in this embodiment, the same reference numerals as in the above embodiment denote the same parts, and a detailed description thereof will be omitted.

In a printer unit 41, image data output from an image processing unit 30 is sequentially stored in a buffer memory 43 in units of lines of an image to be recorded as shown in Fig. 7, temporarily held in the memory 43, and then output to a head driving pulse control circuit 144 in synchronism with a recording speed under the control of a CPU 42. The image data is output to a head driver 145.

The head driving pulse control circuit 144 has an arrangement shown in Fig. 13.

Referring to Fig. 13, a gradation conversion decoder 1440 transfers gradation data 1444 of each picture element in number corresponding to the number of gradation levels to each register stage of a shift register 234 corresponding to each picture element. In order to process a color image, the gradation conversion decoder 1440 performs gradation conversion for each of Y, M, and C colors. At this time, recording is performed by a strobe signal STB1445 supplied from a strobe signal generating circuit 1442. In Fig. 13, a temperature/color correction gradation ROM table 1443 stores correction data for obtaining optimal gradation characteristics for each color on the basis of a temperature correction signal 1446 from a head temperature detector 130a. A gradation counter 1441 counts up each time a clock signal is supplied.

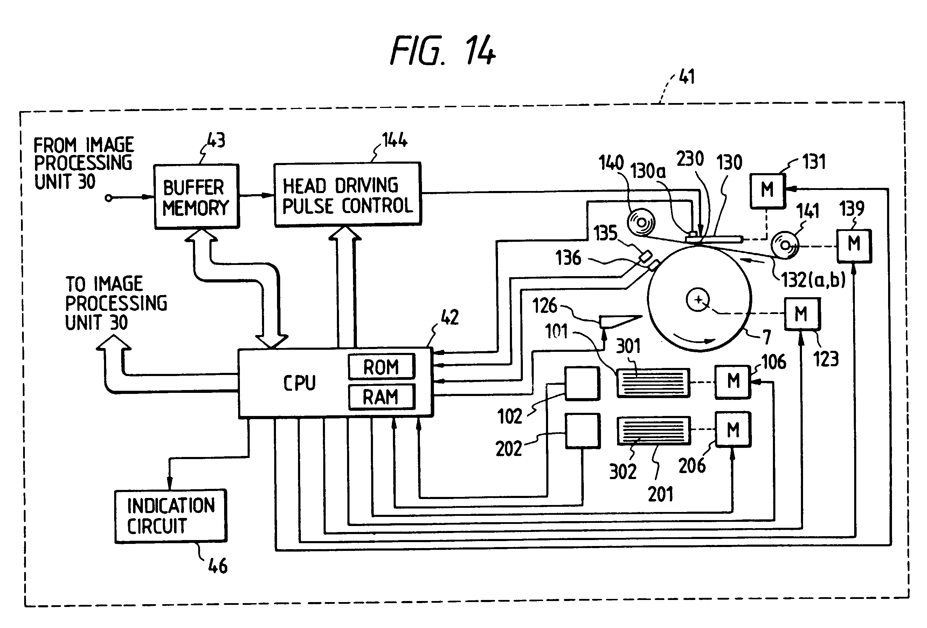

Fig. 14 is a block diagram showing still another embodiment of an arrangement of the printer unit. This embodiment can replace the above embodiment in order to discriminate whether an ink sheet mounted in an ink sheet mounted portion is a sublimable ink sheet or a fusible ink sheet and to indicate the discrimination result, and can be suitably used upon replacement. The embodiment shown in Fig. 14 is obtained by omitting the head driver 145 from the embodiment shown in Fig. 12. That is, in a printer unit 41, image data output from an image processing unit 30 is sequentially stored in a buffer memory 43 in units of lines of an image to be recorded as shown in Fig. 7, temporarily held in the memory 43, and then output to a head driving pulse control circuit 44 in synchronism with a recording speed under the control of a CPU 42. As will be described later, the CPU 42 discriminates the kind of ink sheet 132 and indicates the discrimination result, the presence/absence of recording paper, various error information, and the like on an indication unit 46.

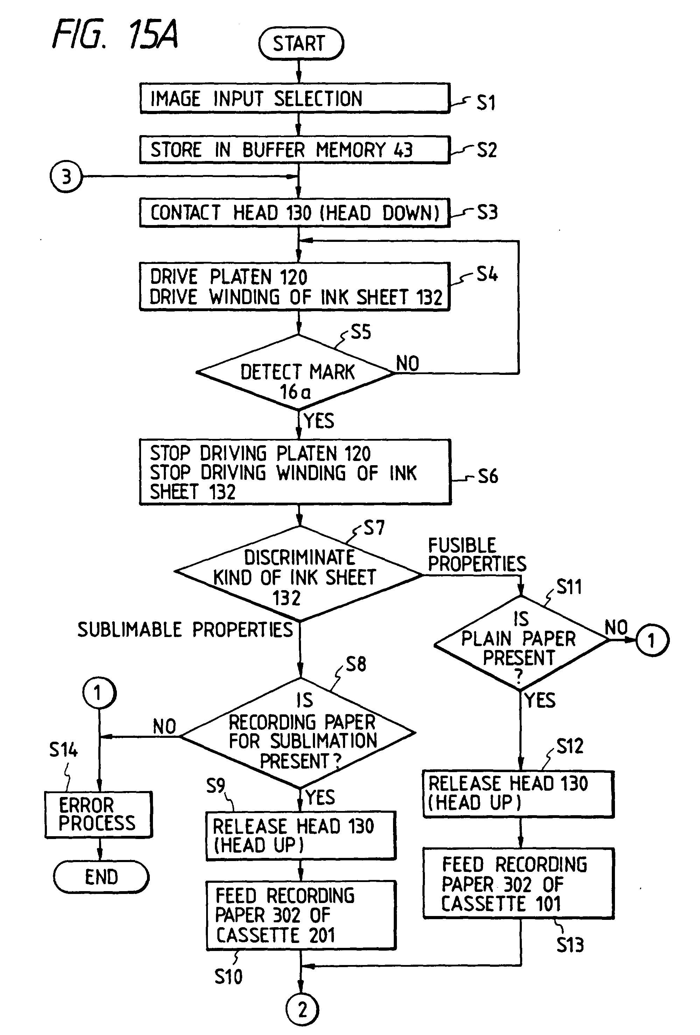

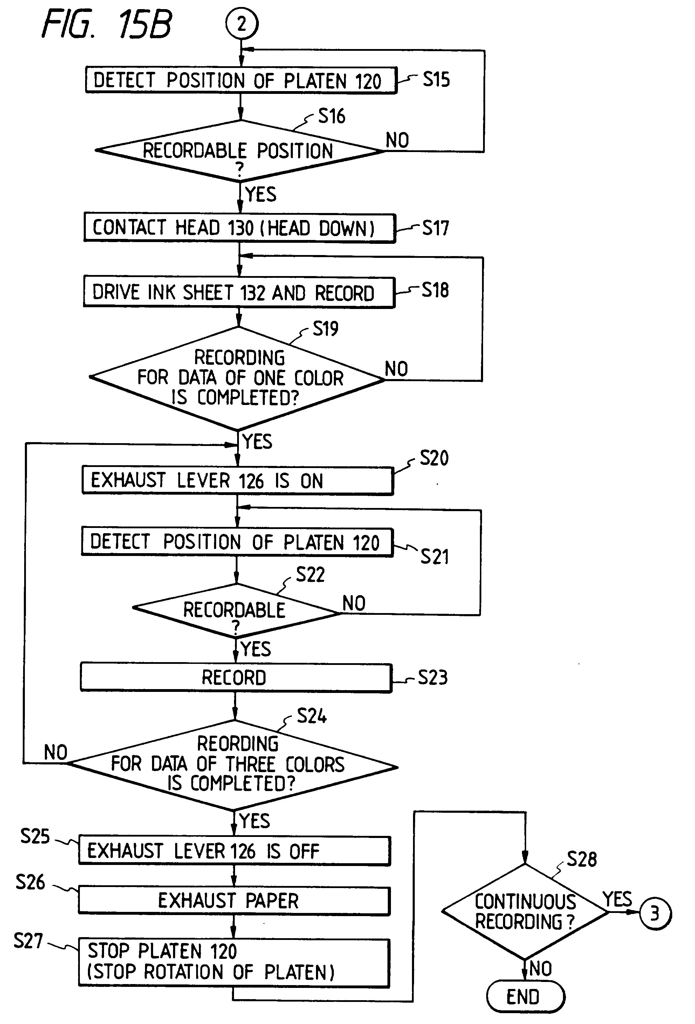

An operation of the color printer of the embodiment in Fig. 14 will be described below. Flow charts shown in Figs. 15A and 15B correspond to a sequence of color recording.

In step S1, selection of the image signal input terminals shown in Fig. 1A, i.e., determination of whether image data is to be input from a telephone line input terminal 31 or a video input terminal 36 is automatically or manually performed. In step S2, the input color image data is stored in an RGB memory 38. In step S3, a thermal head 130 is brought into contact with a platen roller 120 in order to detect a mark 16a. At this time, by properly charging a torsion coil spring 23 by a drive motor 131, an urging force optimal for thermal transfer printing is applied on the head 130 against the platen roller 120.

In step S4, driving of the platen roller 120 and winding of the ink sheet 132 are started to detect an initial position of the ink sheet 132 shown in Fig. 5. Phototransistors 136 for detecting signals from photodiodes 135 constitute pairs of photosensors (135-1 and 136-1, and 135-2 and 136-2) for detecting the mark 16a and a mark 16b shown in Fig. 5, respectively. The ink sheet 132 is moved in the direction indicated by the arrow shown in Fig. 5 until the phototransistor 136-1 outputs a detection signal in step S5.

If the mark 16a is detected by the phototransistor 136 in step S5, this means that the thermal head 130 and the ink sheet 132 are set in recordable positions. Therefore, in step S6, winding of the ink sheet 132 and driving of the platen roller 120 are stopped. In step S7, detection of the mark 16b is performed by the photosensor (135-2 and 136-2), thereby discriminating the kind of ink sheet 132. That is, if the mark 16b is detected by the photosensor (135-2 and 36-2), the flow advances from step S7 to S8 since the ink sheet 132 is a sublimable ink sheet. If the mark 16b is not detected by the photosensor (135-2 and 136-2), the flow advances to step S11 since the ink sheet 132 is a fusible ink sheet.

In step S8, whether recording paper for a sublimable ink sheet is stored in the cassette 201 is checked. If the sublimable ink recording paper is stored in the cassette 201, the flow advances to step S9, and the thermal head 130 is moved up. In step S10, the pickup roller 203 and the separating rollers 204 and 205 are driven by the motor 206 to feed the recording paper from the cassette 201 toward the platen roller 120. If the fusible ink sheet is detected, whether plain paper is stored in the cassette 101 is checked. If the plain paper is stored, the flow advances to step S12, and the thermal head 130 is removed from the platen roller 120. In step S13, the pickup roller 103 and the separating rollers 104 and 105 are driven by the motor 106 to feed the plain paper toward the platen roller 120. If the corresponding recording paper is not present in steps S8 and S11, the flow advances to step S14, and an error process such as indication of information representing that no paper is present is performed.

In order to protect the sheet 132 from being fed by rotation of the platen roller 120 before the paper feed operation in steps S10 and S13 and upon detection of an initial position of the recording paper to be described below, the head 130 is slightly separated from the platen roller 120 so that the ink sheet 132 is not fed by rotation of the platen roller 120.

In step S15, a rotational position of the platen roller 120 is detected by its rotational phase angle detector. If it is determined in step S16 that the recording paper is set in a recordable position, the head 130 is brought into contact with the platen roller 120 in step S17, and a recording operation is started in step S18, thereby recording one-color data of one line. At this time, an urging force on the head 130 is set to be an optimal urging force determined in accordance with the kind of ink sheet 132.

In step S19, whether recording of image data (Y data) of one color is completed is checked. If recording is not completed, the flow returns to step S18, and a predetermined amount of the ink sheet 132 is wound to record image data of the next line. If it is determined in step S19 that recording of image data of one color is completed, the flow advances to step S20. In step S20, the exhaust lever driven, and the paper guide lever 126 is displaced to the position indicated by the solid line in Fig. 1C.

In this manner, in steps S21 and S22, the recording paper is fed to the recording position again by rotation of the platen roller 120. That is, on the basis of the rotational position of the platen roller 120, the platen roller 120 is rotated until the recording paper and the ink sheet 132 are fed to the recordable position. Then, color recording is performed in step S23. In this recording operation, recording is performed such that the ink sheet 132 is moved at the same moving speed as the recording paper after the recording paper is set in the recordable position. If it is determined in step S24 that recording for data of three colors Y, M, and C is completed, the flow advances to step S25.

In step S25, the exhaust lever 126 is turned off to be displaced to the position indicated by the dotted line in Fig. 1C. In step S26, the recorded paper is exhausted to the tray 125 by rotation of the platen roller 120. In step S27, rotation of the platen roller 120 is stopped. If continuous recording is determined in step S28, the flow returns to step S3 to perform the above operation.

As described above, according to this embodiment, the kind of ink sheet can be easily detected.

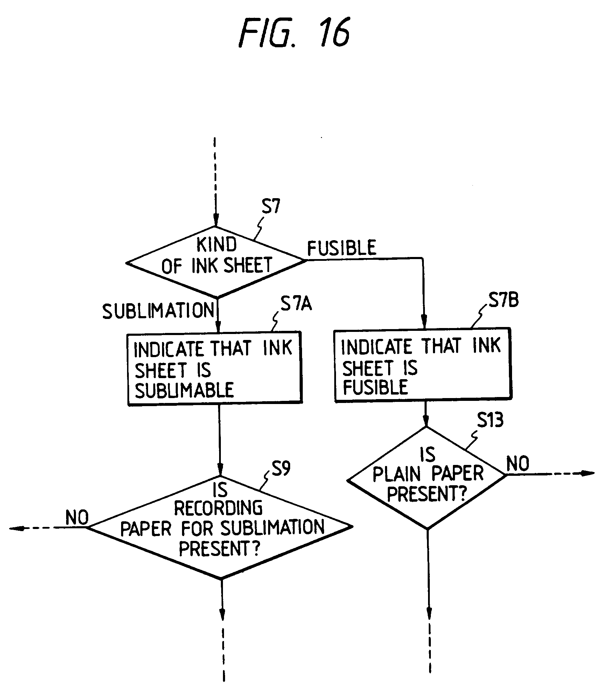

In addition, as shown in Fig. 16, step S7A for indicating that the ink sheet is sublimable and step S7B for indicating that the ink sheet is fusible may be inserted between steps S7 and S8 and steps S7 and S11 shown in Fig. 15A, respectively.

In the above embodiments, a recording medium (such as plain paper, processed paper, or plastic for OHP) is fed from a cassette. However, the present invention is not limited to the above embodiments. For example, a recording medium supported as a deck or roll may be fed.

Furthermore, a gradation recording method is not limited to that described in the above embodiments but can be any of conventional methods.

As has been described above, the present invention can provide a recording apparatus which can perform clear recording.

## Claims

1. A recording apparatus for performing image recording by thermally transferring an ink of an ink sheet having fusible ink (132a) or an ink sheet having sublimable ink (132b) to a recording medium (301, 302), said apparatus comprising:
discriminating means (42) for discriminating whether the ink sheet being used for the image recording is said ink sheet having fusible ink (132a) or said ink sheet having sublimable ink (132b);
a thermal head (130) for performing recording on the recording medium (301, 302) by acting on said ink sheet (132a, 132b), said thermal head (130) including a plurality of heating elements (230) for performing recording of a corresponding plurality of dots; and
control means (42, 43, 44, 45) for performing drive control of said plurality of heating elements (230),
said control means (42, 43, 44, 45) performing the drive control such that each picture element (P1) of the image to be recorded is recorded with a plurality of dots (k₀ to k₃) constituting an n x n dot matrix (62) and said plurality of heating elements (230) is driven in accordance with a plurality of discrete drive levels,
**characterized in that**
when the recording is performed with said ink sheet having fusible ink (132a), the number of said discrete drive levels is smaller than the number of gradation levels of the image data to be recorded, the gradation reproduction of a picture element under consideration being obtained by individually selecting a drive level from said number of discrete drive levels for each heating element forming said n x n dot matrix (62);
when the recording is performed with said ink sheet having sublimable ink (132b), the number of said discrete drive levels is the same as the number of gradation levels of the image data to be recorded, and each heating element forming said n x n dot matrix (62) is driven with the same drive level which corresponds to the gradation of the picture element under consideration; and that
a biasing force control means (42) is provided for controlling a biasing force of said recording head (130) against a platen member (120) by a biasing means (131, 133), wherein
when the ink sheet is said ink sheet having sublimable ink (132b), said biasing force control means (42) controls the biasing force of said recording head (130) against said platen member (120) with a biasing force less than that in case of said ink sheet having fusible ink (132a).

2. An apparatus according to claim 1,
**characterized in that**
sublimable thermal transfer recording paper is used for said recording medium (302) when the discriminated ink sheet is said ink sheet having sublimable ink (132b).

3. An apparatus according to claim 1,
**characterized in that**
plain paper is used for said recording medium (301) when the discriminated ink sheet is said ink sheet having fusible ink (132a).

4. An apparatus according to any of the preceding claims 1 to 3,
**characterized by**
conveying means (123, 120) for conveying said recording medium (301, 302), wherein the conveyance speed of said recording medium (301, 302) moved by said conveying means (123, 120) is controlled (S38, S39) in accordance with said discrimination result of said discriminating means (42).

5. A recording method for performing image recording on a recording medium with an apparatus according to claims 1 or 2, comprising the steps of:
mounting a detachable ink sheet (132a, 132b);
discriminating a kind of said ink sheet (132a, 132b) mounted in said mounting step;
performing recording on a kind of recording medium (301, 302) corresponding to the discriminated kind of ink sheet (132a, 132b), using said thermal head (130) including said plurality of heating elements (230);
supplying said corresponding kind of recording medium (301, 302) to said thermal head (130); and
performing drive control such that each picture element (P1) of the image to be recorded is recorded with a plurality of dots (k₀ to k₃) constituting an n x n dot matrix (62) and said plurality of heating elements (230) is driven in accordance with a plurality of discrete drive levels,
**said method being characterized by the steps of**
when the recording is performed with an ink sheet having fusible ink (132a), setting a number of discrete drive levels which is smaller than a number of gradation levels of the image data to be recorded and obtaining the full gradation reproduction of a picture element under consideration by individually selecting a drive level from said number of discrete drive levels for each heating element forming said n x n dot matrix (62); or
when the recording is performed with said ink sheet having sublimable ink (132b), setting the number of discrete drive levels to the same as the number of gradation levels of the image data to be recorded wherein the drive levels correspond to the gradation levels of the picture data, and driving each heating element forming said n x n dot matrix (62) with the same drive level which corresponds to the gradation of the picture element under consideration; and the step of
when using said ink sheet having sublimable ink (132b), controlling the biasing force of said recording head (130) against said platen member (120) with a biasing force smaller than when using said ink sheet having fusible ink (132a).

## Patentansprüche

1. Aufzeichnungsvorrichtung zum Ausführen der Bildaufzeichnung durch Thermo-Transfer einer Tinte einer Tintenunterlage mit schmelzbarer Tinte (**132a**) oder einer Tintenunterlage mit sublimierbarer Tinte (**132b**) auf einem Aufzeichnungsmedium (**301, 302**), wobei die Vorrichtung aufweist:
- eine Unterscheidungseinrichtung (**42**) zum Unterscheiden, ob die für das Bildaufzeichnen verwendete Tintenunterlage die Tintenunterlage mit schmelzbarer Tinte (**132a**) oder die Tintenunterlage mit sublimierbarer Tinte (**132b**) ist,
- einen Thermokopf (**130**) zum Ausführen der Aufzeichnung auf dem Aufzeichnungsmedium (**301, 302**) durch das Einwirken auf die Tintenunterlage (**132a, 132b**), wobei der Thermokopf (**130**) eine Vielzahl von Wärmeerzeugungselementen (**230**) zum Ausführen der Aufzeichnung einer entsprechenden vielzahl von Punkten aufweist, und
- eine Steuereinrichtung (**42, 43, 44, 45**) zum Ausführen der Ansteuerung der Vielzahl von Wärmeerzeugungselementen (**230**), wobei die Steuereinrichtung (**42, 43, 44, 45**) die Ansteuerung so ausführt, daß jedes Bildelement (**P1**) des aufzuzeichnenden Bilds mit einer Vielzahl von Punkten (**k**_{**0**} **bis k**_{**3**}) aufgezeichnet wird, welche eine n x n-Punktmatrix (**62**) bilden, und die Vielzahl von Wärmeerzeugungselementen (**230**) gemäß einer Vielzahl von diskreten Ansteuerstufen angesteuert wird,
**dadurch gekennzeichnet, daß** beim Ausführen der Aufzeichnung mit der Tintenunterlage mit schmelzbarer Tinte (**132a**) die Anzahl der diskreten Ansteuerstufen kleiner als die Anzahl der Gradationswerte der aufzuzeichnenden Bilddaten ist, wobei sich die Gradationswiedergabe eines berücksichtigten Bildelements durch einzelnes Auswählen einer Ansteuerstufe aus der Anzahl der diskreten Ansteuerstufen für jedes Wärmeerzeugungselement ergibt, welches die n x n-Punktmatrix (**62**) erzeugt,
- wenn das Aufzeichnen mit der Tintenunterlage mit sublimierbarer Tinte (**132b**) ausgeführt wird, wobei die Anzahl der diskreten Ansteuerstufen der Anzahl der Gradationswerte der aufzuzeichnenden Bilddaten entspricht, und jedes Wärmeerzeugungselement, welches die n x n-Punktmatrix (**62**) erzeugt, mit derselben Ansteuerstufe angesteuert wird, welche der Gradation des berücksichtigten Bildelements entspricht, und daß
- eine Drängkraft-Steuereinrichtung (**42**) für das Steuern einer Drängkraft des Aufzeichnungskopfs bzw. des Thermokopfs (**130**) gegen ein Papiertransportelement (**120**) durch eine Drängeinrichtung (**131, 133**) angeordnet ist, in welcher,
- wenn die Tintenunterlage die Tintenunterlage mit sublimierbarer Tinte (**132b**) ist, die Drängkraft-Steuereinrichtung (**42**) die Drängkraft des Thermokopfs (**130**) gegen das Papiertransportelement (**120**) mit einer Drängkraft steuert, welche geringer als jene im Fall der Tintenunterlage mit schmelzbarer Tinte (**132a**) ist.

2. Aufzeichnungsvorrichtung gemäß Anspruch 1, **dadurch gekennzeichnet, daß** Thermo-Transfer-Aufzeichnungspapier für sublimierbare Tinte als Aufzeichnungsmedium (**302**) verwendet wird, wenn die unterschiedene Tintenunterlage die Tintenunterlage mit sublimierbarer Tinte (**132b**) ist.

3. Aufzeichnungsvorrichtung gemäß Anspruch 1, **dadurch gekennzeichnet, daß** Normalpapier als Aufzeichnungsmedium (**301**) verwendet wird, wenn die unterschiedene Tintenunterlage die Tintenunterlage mit schmelzbarer Tinte (**132a**) ist.

4. Aufzeichnungsvorrichtung gemäß einem der vorhergehenden Ansprüche 1 bis 3, **gekennzeichnet durch** eine Transporteinrichtung (**123, 120**) zum Transportieren des Aufzeichnungsmediums (**301, 302**), wobei die Transportgeschwindigkeit des durch die Transporteinrichtung (**123, 120**) bewegten Aufzeichnungsmediums (**301, 301**) gemäß dem Unterscheidungsergebnis der Unterscheidungseinrichtung (**42**) gesteuert wird (**S38, S39**).

5. Aufzeichnungsverfahren zum Ausführen der Bildaufzeichnung auf einem Aufzeichnungsmedium mit einer Vorrichtung gemäß Anspruch 1 oder Anspruch 2 mit den Schritten:
- Anordnen einer auswechselbaren Tintenunterlage (**132a, 132b**),
- Unterscheiden einer Art der Tintenunterlage (**132a, 132b**), welche in dem Anordnungsschritt angeordnet worden ist,
- Ausführen der Aufzeichnung auf einer Art des Aufzeichnungsmediums (**301, 302**) entsprechend der unterschiedenen Art der Tintenunterlage (**132a, 132b**), unter Verwendung des Thermokopfs (**130**) mit der Vielzahl von Wärmeerzeugungselementen (**230**),
- Zuführen der entsprechenden Art des Aufzeichnungsmediums (**301, 302**) zum Thermokopf (**130**), und
- Ausführen der Antriebssteuerung auf eine solche Weise, daß jedes Bildelement (**P1**) des aufzuzeichnenden Bilds mit einer Vielzahl von Punkten (**k**_{**0**} **bis k**_{**3**}) aufgezeichnet wird, welche eine n x n-Punktmatrix (**62**) bilden, und die Vielzahl der Wärmeerzeugungselemente (**230**) gemäß einer vielzahl von diskreten Ansteuerstufen angesteuert wird,
**wobei das Verfahren durch die Schritte gekennzeichnet ist,**
- bei welchen das Aufzeichnen mit einer Tintenunterlage mit schmelzbarer Tinte (**132a**) ausgeführt wird, das Einstellen einer Anzahl von diskreten Ansteuerstufen vorgenommen wird, welche kleiner als eine Anzahl von Gradationswerten der aufzuzeichnenden Bilddaten ist, und das Erlangen der vollständigen Gradationswiedergabe eines berücksichtigten Bildelements durch das einzelne Auswählen einer Ansteuerstufe aus der Anzahl von diskreten Ansteuerstufen für jedes Wärmeerzeugungselement erfolgt, welches die n x n-Punktmatrix (**62**) erzeugt, oder
- bei welchen das Aufzeichnen mit der Tintenunterlage mit sublimierbarer Tinte (**132b**) ausgeführt wird, das Einstellen der Anzahl der diskreten Ansteuerstufen in Übereinstimmung mit der Anzahl der Gradationswerte der aufzuzeichnenden Bilddaten erfolgt, wobei die Ansteuerstufen den Gradationswerten der Bilddaten entsprechen, und das Ansteuern jedes Wärmeerzeugungselements, welches die n x n-Punktmatrix (**62**) erzeugt, mit derselben Ansteuerstufe ausgeführt wird, welche der Gradation des berücksichtigten Bildelements entspricht, und
- bei welchen die Tintenunterlage mit sublimierbarer Tinte (**132b**) verwendet wird und das Steuern der Drängkraft des Aufzeichnungskopfs bzw. Thermokopfs (**130**) gegen das Papiertransportelement (**120**) mit einer Drängkraft erfolgt, welche kleiner als die Drängkraft beim Verwenden der Tintenunterlage mit schmelzbarer Tinte (**132a**) ist.

## Revendications

1. Appareil d'enregistrement destiné à effectuer un enregistrement d'image en transférant thermiquement une encre d'une feuille encreuse ayant une encre fusible (132a) ou d'une feuille encreuse ayant une encre sublimable (132b), à un support d'enregistrement (301, 302), ledit appareil comportant :
des moyens de détermination (42) destiné à déterminer si la feuille encreuse utilisée pour l'enregistrement d'image est ladite feuille encreuse ayant une encre fusible (132a) ou ladite feuille encreuse ayant une encre sublimable (132b) ;
une tête thermique (130) destinée à effectuer un enregistrement sur le support d'enregistrement (301, 302) en agissant sur ladite feuille encreuse (132a, 132b), ladite tête thermique (130) comprenant une pluralité d'éléments chauffants (230) destinés à effectuer un enregistrement d'une pluralité correspondante de points ; et
des moyens de commande (42, 43, 44, 45) destinés à effectuer une commande d'attaque de ladite pluralité d'éléments chauffants (230),
lesdits moyens de commande (42, 43, 44, 45) effectuant la commande d'attaque de manière que chaque élément d'image (P1) de l'image devant être enregistrée soit enregistré avec une pluralité de points (k₀ à k₃) constituant une matrice (62) de n x n point et ladite pluralité d'éléments chauffants (230) est attaquée conformément à une pluralité de niveaux d'attaque discrets,
caractérisé en ce que
lorsque l'enregistrement est effectué avec ladite feuille encreuse ayant une encre fusible (132a), le nombre desdits niveaux d'attaque discrets est inférieur au nombre de niveaux de gradation des données d'images devant être enregistrées, la reproduction de gradation d'un élément d'image considéré étant obtenue par une sélection d'un niveau d'attaque individuel parmi ledit nombre de niveaux d'attaque discrets pour chaque élément chauffant formant ladite matrice (62) de n x n point ;
lorqsue l'enregistrement est effectué avec ladite feuille encreuse ayant une encre sublimable (132b), le nombre desdits niveaux d'attaque discrets est égal au nombre de niveaux de gradation des données d'images devant être enregistrées, et chaque élément chauffant formant ladite matrice (62) de n x n point est attaqué avec le même niveau d'attaque qui correspond à la gradation de l'élément d'image considéré ; et en ce que
un moyen (42) de réglage de force de rappel est prévu pour régler une force de rappel de ladite tête d'enregistrement (130) contre un élément à cylindre (120) par un moyen de rappel (131, 133), dans lequel
lorsque la feuille encreuse est ladite feuille encreuse ayant une encre sublimable (132b), ledit moyen (42) de réglage de la force de rappel règle la force de rappel de ladite tête d'enregistrement (130) contre ledit élément à cylindre (120) avec une force de rappel inférieure à celle présente dans le cas de ladite feuille encreuse ayant une encre fusible (132a).

2. Appareil selon la revendication 1,
caractérisé en ce que
du papier d'enregistrement par transfert thermique sublimable est utilisé pour ledit support d'enregistrement (302) lorsque la feuille encreuse déterminée est ladite feuille encreuse ayant une encre sublimable (132b).

3. Appareil selon la revendication 1,
caractérisé en ce que
du papier ordinaire est utilisé pour ledit support d'enregistrement (301) lorsque la feuille encreuse déterminée est ladite feuille encreuse ayant une encre fusible (132a).

4. Appareil selon l'une quelconque des revendications précédentes 1 à 3,
caractérisé par
des moyens de transport (123, 120) destinés à transporter ledit support d'enregistrement (301, 302), la vitesse de transport dudit support d'enregistrement (301, 302) déplacé par lesdits moyens de transport (123, 120) étant réglée (S38, S39) en fonction dudit résultat de la détermination effectuée par lesdits moyens de détermination (42).

5. Procédé d'enregistrement pour effectuer un enregistrement d'une image sur un support d'enregistrement avec un appareil selon les revendications 1 ou 2, comprenant les étapes dans lesquelles :
on monte une feuille encreuse amovible (132a, 132b) ;
on détermine un type de ladite feuille encreuse (132a, 132b) monté dans ladite étape de montage ;
on effectue un enregistrement sur un type de support d'enregistrement (301, 302) correspondant au type déterminé de la feuille encreuse (132a, 132b), en utilisant ladite tête thermique (130) comprenant ladite pluralité d'éléments chauffants (230) ;
on fournit ledit type correspondant de support d'enregistrement (301, 302) à ladite tête thermique (130) et
on exécute une commande d'attaque telle que chaque élément d'image (P1) de l'image devant être enregistrée est enregistré avec une pluralité de points (k₀ à k₃) constituant une matrice (62) de n x n point et ladite pluralité d'éléments chauffants (230) est attaquée conformément à une pluralité de niveaux d'attaque discrets,
ledit procédé étant caractérisé par les étapes dans lesquelles
lorsque l'enregistrement est effectué avec une feuille encreuse ayant une encre fusible (132a), on établit un nombre de niveaux d'attaque discrets qui est inférieur à un nombre de niveaux de gradation des données d'images devant être enregistrées et on obtient la reproduction en gradation complète d'un élément d'image considéré en sélectionnant un niveau d'attaque individuel parmi ledit nombre de niveaux d'attaque discrets pour chaque élément chauffant formant ladite matrice (62) de n x n point ; ou
lorsque l'enregistrement est effectué avec ladite feuille encreuse ayant une encre sublimable (132b), on établit le nombre de niveaux d'attaque discrets afin qu'il soit égal au nombre de niveaux de gradation des données d'images devant être enregistrées, les niveaux d'attaque correspondant aux niveaux de gradation des données d'images, et on attaque chaque élément chauffant formant ladite matrice (62) de n x n points avec le même niveau d'attaque qui correspond à la gradation de l'élément d'image considéré ; et l'étape dans laquelle
lorsqu'on utilise ladite feuille encreuse ayant une encre sublimable (132b), on règle la force de rappel de ladite tête d'enregistrement (130) contre ledit élément à cylindre (120) avec une force de rappel plus petite que lorsqu'on utilise ladite feuille encreuse ayant une encre fusible (132a).
